(19) Europäisches Patentamt
European Patent Office
Office européen des brevets

(11) **EP 2 542 453 B1**

(12) **EUROPEAN PATENT SPECIFICATION**

(45) Date of publication and mention
of the grant of the patent:
**21.01.2015 Bulletin 2015/04**

(51) Int Cl.:
***B60S 1/08*** *(2006.01)*     ***G01N 21/94*** *(2006.01)*

(21) Application number: **10711135.3**

(22) Date of filing: **04.03.2010**

(86) International application number:
**PCT/EP2010/001330**

(87) International publication number:
**WO 2011/107115 (09.09.2011 Gazette 2011/36)**

(54) **METHOD AND DEVICE OF RAINDROP DETECTION ON A WINDSCREEN**

VERFAHREN UND VORRICHTUNG ZUR ERKENNUNG VON REGENTROPFEN AUF EINER WINDSCHUTZSCHEIBE

PROCÉDÉ ET DISPOSITIF DE DÉTECTION DES GOUTTES DE PLUIE SUR UN PARE-BRISE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**09.01.2013 Bulletin 2013/02**

(73) Proprietor: **Valeo Schalter und Sensoren GmbH 74321 Bietigheim-Bissingen (DE)**

(72) Inventors:
• **ROBERT, Caroline**
  **F-75017 Paris (FR)**
• **AHIAD, Samia**
  **F-93250 Villemomble (FR)**
• **ZHANG, Xiyuan**
  **F-75005 Paris (FR)**

(56) References cited:
**EP-A1- 1 674 356     EP-A2- 1 560 159
EP-A2- 1 860 426     US-A1- 2004 200 948
US-B1- 6 429 933**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a method and a device of raindrop detection on a vehicle windscreen by processing images, particularly in order to trigger the automatic control of a functionality of the vehicle, particularly that of the windscreen wipers.

In motor vehicles, several driving assistance systems are known, using images captured by a single or by several cameras.

The images obtained can be processed to allow a display on screens, for example at the dashboard or projected on the windscreen, in particular to alert the driver in the case of danger or simply to improve his visibility. The images can also make it possible to detect raindrop or fog on the windscreen.

These images can participate in the automatic triggering of a functionality of the vehicle (alert to the driver, automatic triggering of braking, automatic triggering of the windscreen wipers in the case of the display of drops of water on the windscreen, visual or audible warning, control of certain functions of the headlight, etc).

However, raindrop detection may not be always well adapted to the environmental lighting changes, such as during the night or during a tunnel crossing by the vehicle.

Document US6429933 B1 discloses a moisture sensing device and method of image processing thereof according to the preamble of claims 1 and 5.

An object of the invention is therefore to overcome this drawback by proposing ar improved method and an improved device for raindrop detection on a windscreen in changing lighting environment, such as by night or during a tunnel crossing.

In a first aspect of the present invention, this object is achieved by a method of raindrop detection on a windscreen by capturing images on said windscreen, including a step of edge detection in an area of interest of said captured images, characterized in that said method further comprises a step of scaling the captured images pixels in function of the ambient light level passing through said windscreen before detecting edges, the scaling step converting the intensity of each pixel in function of a target mean and a target standard deviation of the pixels distribution of said area of interest.

Then, the pixels of the captured images are scaled in function of the ambient windscreen light level, becoming independents of the changing lighting environment. Thus, as the pixels of the captured images are scaled in function of the ambient windscreen light level, the detection thresholds of the edge detection filter can remain fixed. It is no longer necessary to modify the two hysteresis thresholds of the edge detection filter when the environmental luminosity is changing. Moreover, the images contrast is enhanced allowing a better sharpness.

According to the invention the scaling step converts the intensity of each pixel ir function of a target mean and a target standard deviation of the pixels distribution of said area of interest.

Said target mean may be equal to the pixels range mean.

Said target standard deviation may be equal to the pixels range divided by six.

Indeed, as the pixels distribution in said area of the captured images is considered to be of the Normal or Gaussian type, the ideal distribution should have the target mean in the center of the pixel range. Moreover, experimentation has shown that a target standard deviation of 1/6 range is ideal.

With regard to another aspect, the scaling of the captured images is done while the captured images are converted into images comprising a depth adapted to be processed and displayed. Thus, the method of raindrop detection can benefit of the calculation already needed to the images conversion.

The invention also relates to a device for raindrop detection on a windscreen comprising:

- a camera for being mounted onboard a vehicle and configured to view the windscreen on said vehicle, and
- processing means configured to capture images from said camera and to detect edges in the captured images, and to generate at least one signal indicative of the presence of raindrop on said windscreen from information contained in the captured images,

characterized in that the processing means further comprise adaptive scale means configured to implement said method of raindrop detection.

Said adaptive scale means may further be configured to convert the captured images into images comprising a depth adapted to be processed and displayed.

According to an embodiment, said camera provides 12-bits images, said processing means are configured to process 8-bits images, said device for raindrop detection includes a display mean of 8-bits images and said adaptive scale means are configured to scale the captured images pixels in function of the ambient light level passing through the windscreen while converting the 12-bits captured images into a 8-bits processed and displayed images.

As an example, processing means are further configured to generate at least one signal indicative of the presence of raindrop on said windscreen from information contained in the captured images.

Other features and advantages of the invention will become apparent from the following description of a non-limited example and enclosed drawings.

For a better understanding of the invention with regard to the embodiments thereof, reference is made to the accompanying drawings, in which like numerals designate corresponding elements or sections throughout, and in which:

- Figure 1 is an example of a flowchart of a method of raindrop detection,
- Figure 2 is a histogram of an example of an 8-bits image pixels distribution,
- Figure 3 illustrates the modified image obtained after scaling.

The device for raindrop detection comprises a camera mounted onboard a motor vehicle, configured to view the windscreen on said vehicle. The camera is installed in the cab interior of the vehicle, opposite a "wipable" zone of the windscreen, that is to say a zone which is swept by one of the wiper blades while in operation. The camera takes successive images of the road in front of the vehicle through the windscreen. For example, the camera is mounted behind the windscreen wiped area, at approximately ten to twenty centimeters from it.

As used herein, the term "camera" is used to designate any device for acquiring images of the camera type (more particularly the CCD ("charge coupling sensor"s) or CMOS (Complementary Metal Oxide Semiconductor) type) or photosensitive sensor, for example a black and white sensor or a color sensor.

The camera supplies signals representing images that can then be processed. The camera is generally sensitive in the visible range and/or in the infrared range, in particular in the near infrared.

The device for raindrop detection also comprises processing means configured to capture images from said camera and to generate at least one signal indicative of the presence of raindrop on said windscreen from information contained in the captured images.

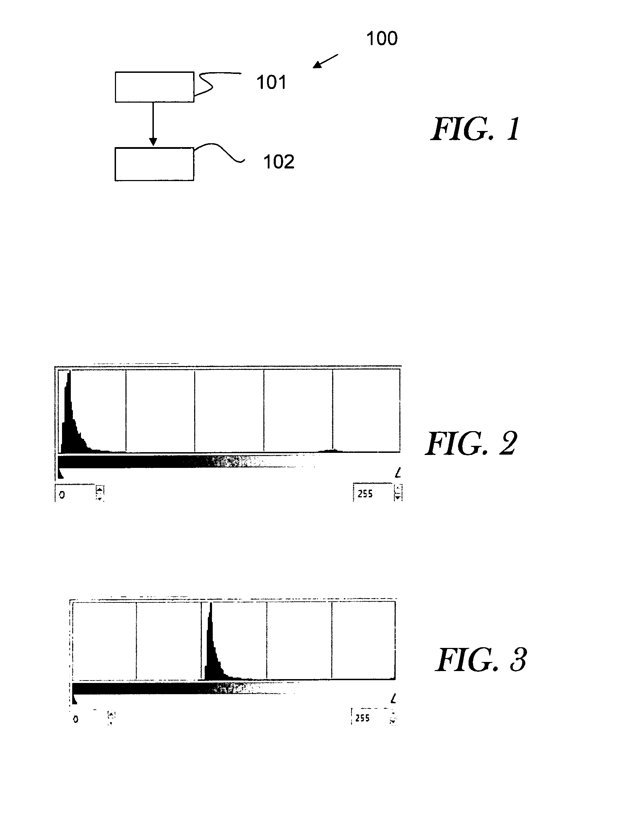

The processing means further comprise adaptive scale means configured to implement a method of detecting the presence of raindrop on a windscreen 100 (figure 1).

Said method 100 includes a step of edge detection 102 in an area of interest of said captured images and a step of scaling 101 the captured images pixels in function of the ambient light level passing through said windscreen before detecting edges. The ambient light is the environmental luminosity of the vehicle passing through the windscreen. The area of interest is a region selected in the captured images.

In one embodiment, the scaling step 101 converts the intensity of each pixel in function of a Target Mean and a Target Standard deviation of the pixels distribution of the area of interest, so that the scaling is adaptive with the changing luminosity.

The conversion may be a proportional one.

For example, the converted intensity I' is calculated with the linear relation (1):

$$(1) \qquad I'(i) = Scale * I(i) + Shift$$

with I(i), the intensity I of each pixel i.

The "Scale" coefficient is issue from the relation (2):

$$(2) \qquad Scale = Target\ Standard\ deviation\ /\ Standard\ deviation$$

For example, the Target Standard deviation is equal to the pixel range divided by six. The Standard deviation is calculated for the pixels distribution of the area of interest.

The "Shift" value is issue from the relation (3):

$$(3) \qquad Shift = Target\ Mean - Scale * Mean$$

For example, the Target Mean is equal to the pixel range mean. The Mean is calculated for the pixels distribution of the area of interest.

The Figure 2 illustrates a grey level histogram of an 8-bits image. The histogram associates the number of pixels in the image with each grey level. The histogram is on the left side, in low values that are characteristic of dark images (as we can see it on degraded grey scale below the histogram). The pixel range is [0 - 255], then the target mean is 128 and the target standard deviation is 42.

The figure 3 illustrates the modified image obtained after scaling. The modified histogram mean is then in the middle of the pixel range, characteristic of a modified image neither too dark nor too bright.

Indeed, as the pixels distribution in said area of the captured images is considered to be of the Normal or Gaussian type, the ideal distribution should have the target mean in the center of the pixel range. Moreover, experimentation has shown that a target standard deviation of 1/6 range is ideal. Then, the captured images pixels are scaled in function of the ambient windscreen light level, being normalized in front of the changing lighting environment, such as when the vehicle crossing a tunnel or when the night is coming. Moreover, the images contrast is enhanced allowing a better sharpness.

According to a further embodiment, the adaptive scale means are configured to scale the captured images in function of the ambient light level passing through the windscreen while converting the depth captured images into a depth images adapted to be processed and displayed. The depth is the number of bits used to represent the grey level of a pixel. Thus, the method of raindrop detection 100 can benefit of the calculation already needed to the images conversion.

As an example, the camera provides 12-bits images, processing means are configured to process 8-bits images and the device for raindrop detection includes a display mean of 8-bits. Thus, the adaptive scale means scale the captured images in function of the ambient light level passing through the windscreen while converting the 12-bits captured images into a 8-bits processed and displayed images.

Then, said method of raindrop detection 100 includes a step of detecting edges 102. In non-limiting examples, edge detection methods such as the Sobel, Prewitt, Roberts, Zero-cross, Canny methods etc. can be used.

The edge detection allows generating a set of curves corresponding to boundaries of objects seen in the field of view of the camera passing through the windscreen. Detected objects are potentially drops on the windscreen, obstacles or lanes on the road. Raindrops can be separated from other objects using selection rules and characteristics of each set.

Thus, as the pixels of the captured images are scaled in function of the ambient windscreen light level, the detection thresholds of the edge detection filter can remain fixed. It is no longer necessary to modify the two hysteresis thresholds of the edge detection filter when the environmental luminosity changes.

## Claims

1. Method of raindrop detection on a windscreen by capturing images on said windscreen, including a step of edge detection (102) in an area of interest of said captured images, **characterized in that** said method further comprises a step of scaling (101) the captured images pixels in function of the ambient light level passing through said windscreen before detecting edges,

   the scaling step (101) converting the intensity of each pixel in function of a target mean and a target standard deviation of the pixels distribution of said area of interest.

2. Method of raindrop detection according to claim 1, **characterized in that** said target mean is equal to the pixel range mean.

3. Method of raindrop detection according to one of claim 1 or 2, **characterised in that** said target standard deviation is equal to the pixel range divided by six.

4. Method of raindrop detection according to one of claims 1 to 3, **characterized in that** the scaling of the captured images is done while the captured images arc converted into images comprising a depth adapted to be processed and displayed.

5. Device for raindrop detection, on a windscreen camprising ;

   - a camera for being mounted onboard a vehicle and configured to view the windscreen on said vehicle, and
   - processing means configured to capture images from said camera and to detect edges in the captured images, and to generate at least one signal indicative of the presence of raindrop on said windscreen from information contained in the captured images.
   **characterized in that** the processing means further comprise adaptive scale means configured to implement a method of raindrop detection according to one of claims 1 to 4.

6. Device for raindrop detection according to claim 5, in combination with a method of raindrop detection according to claim 4, **characterized in that** adaptive scale means are further configured to convert the captured images into images comprising a depth adapted to be processed and displayed.

7.  Device for raindrop detection according to claim 6, **characterised in that** :

- said camera provides 12-bits images,
- said processing means are configured to process 8-bits images,
- said device for raindrop detection device includes a display mean of 8-bits, and
- said adaptive scale means are configured to scale the captured images pixels in function of the ambient light level while converting the 12-bits captured images into 8-bits processed and displayed images.

**Patentansprüche**

1.  Verfahren zur Regentropfendetektion auf einer Windschutzscheibe durch Aufnehmen von Bildern auf der Windschutzscheibe, einschließlich eines Schrittes der Kantendetektion (102) in einem Gebiet von Interesse der aufgenommen Bilder, **dadurch gekennzeichnet, dass** das Verfahren ferner vor dem Detektieren der Kanten einen Schritt des Skalierens (101) der Pixel der aufgenommenen Bilder als Funktion des Umgebungslichtpegels, der durch die Windschutzscheibe geht, umfasst, wobei der Skalierungsschritt (101) die Intensität jedes Pixels als Funktion eines Zielmittelwerts und einer Zielstandardabweichung der Pixelverteilung des Gebiets von Interesse umwandelt.

2.  Verfahren zur Regentropfendetektion nach Anspruch 1, **dadurch gekennzeichnet, dass** das Zielmittel gleich dem Pixelbereichsmittelwert ist.

3.  Verfahren zur Regentropfendetektion nach einem der Ansprüche 1 oder 2, **dadurch gekennzeichnet, dass** die Zielstandardabweichung gleich dem Pixelbereich geteilt durch sechs ist.

4.  Verfahren zur Regentropfendetektion nach einem der Ansprüche 1 bis 3, **dadurch gekennzeichnet, dass** das Skalieren der aufgenommenen Bilder durchgeführt wird, während die aufgenommenen Bilder in Bilder umgewandelt werden, die eine Tiefe umfassen, die dafür ausgelegt ist, verarbeitet und angezeigt zu werden.

5.  Vorrichtung zur Regentropfendetektion auf einer Windschutzscheibe, das Folgendes umfasst:

- eine Kamera, die an Bord eines Fahrzeugs montiert sein kann und so konfiguriert ist, dass sie auf die Windschutzscheibe an dem Fahrzeug gerichtet ist, und
- Verarbeitungsmittel, die konfiguriert sind, Bilder von der Kamera aufzunehmen und Kanten in den aufgenommenen Bildern zu detektieren und mindestens ein Signal zu erzeugen, das die Anwesenheit von Regentropfen auf der Windschutzscheibe aus den Informationen, die in den aufgenommenen Bildern enthalten sind, anzeigt, **dadurch gekennzeichnet, dass** die Verarbeitungsmittel ferner ein adaptives Skalierungsmittel umfassen, das konfiguriert ist, ein Verfahren zur Regentropfendetektion gemäß einem der Ansprüche 1 bis 4 auszuführen.

6.  Vorrichtung zur Regentropfendetektion nach Anspruch 5 in Kombination mit einem Verfahren zur Regentropfendetektion nach Anspruch 4, **dadurch gekennzeichnet, dass** die adaptiven Skalierungsmittel ferner konfiguriert sind, die aufgenommenen Bilder in Bilder umzuwandeln, die eine Tiefe umfassen, die dafür ausgelegt ist, verarbeitet und angezeigt zu werden.

7.  Vorrichtung zur Regentropfendetektion nach Anspruch 6, **dadurch gekennzeichnet, dass**:

- die Kamera 12-Bit-Bilder liefert,
- die Verarbeitungsmittel konfiguriert sind, 8-Bit-Bilder zu verarbeiten,
- die Vorrichtung zur Regentropfendetektion ein Anzeigemittel von 8 Bits umfasst und
- die adaptiven Skalierungsmittel konfiguriert sind, die aufgenommenen Bilderpixel als Funktion des Umgebungsluftpegels zu skalieren, während sie die aufgenommenen Bilder mit 12 Bits in verarbeitete und angezeigte Bilder mit 8 Bits umwandeln.

**Revendications**

1. Procédé de détection de gouttes de pluie sur un pare-brise par capture d'images sur ledit pare-brise, comportant une étape de détection de bords (102) dans une zone d'intérêt desdites images capturées, **caractérisé en ce que** ledit procédé comprend en outre une étape de changement d'échelle (101) des pixels des images capturées en fonction du niveau de lumière ambiante traversant ledit pare-brise avant de détecter les bords, l'étape de changement d'échelle (101) convertissant l'intensité de chaque pixel en fonction d'une moyenne cible et d'un écart type cible de la distribution de pixels de ladite zone d'intérêt.

2. Procédé de détection de gouttes de pluie selon la revendication 1, **caractérisé en ce que** ladite moyenne cible est égale à la moyenne de la gamme de pixels.

3. Procédé de détection de gouttes de pluie selon l'une des revendications 1 ou 2, **caractérisé en ce que** ledit écart type cible est égal à la gamme de pixels divisée par six.

4. Procédé de détection de gouttes de pluie selon l'une des revendications 1 à 3, **caractérisé en ce que** le changement d'échelle des images capturées est réalisé pendant que les images capturées sont converties en images comprenant une profondeur adaptée pour être traitée et affichée.

5. Dispositif de détection de gouttes de pluie sur un pare-brise comprenant :

   - une caméra destinée à être montée à bord d'un véhicule et configurée pour visualiser le pare-brise sur ledit véhicule, et
   - des moyens de traitement configurés pour capturer des images à partir de ladite caméra et pour détecter des bords dans les images capturées, et pour générer au moins un signal révélateur de la présence de gouttes de pluie sur ledit pare-brise à partir d'informations contenues dans les images capturées, **caractérisé en ce que** les moyens de traitement comprennent en outre des moyens de changement d'échelle adaptatifs configurés pour mettre en oeuvre un procédé de détection de gouttes de pluie selon l'une des revendications 1 à 4.

6. Dispositif de détection de gouttes de pluie selon la revendication 5, en combinaison avec un procédé de détection de gouttes de pluie selon la revendication 4, **caractérisé en ce que** les moyens de changement d'échelle adaptatifs sont également configurés pour convertir les images capturées en images comprenant une profondeur adaptée pour être traitée et affichée.

7. Dispositif de détection de gouttes de pluie selon la revendication 6, **caractérisé en ce que** :

   - ladite caméra fournit des images en 12 bits,
   - lesdits moyens de traitement sont configurés pour traiter des images en 8 bits,
   - ledit dispositif de détection de gouttes de pluie comporte un moyen d'affichage de 8 bits, et
   - lesdits moyens de changement d'échelle adaptatifs sont configurés pour changer l'échelle des pixels des images capturées en fonction du niveau de lumière ambiante tout en convertissant les images capturées en 12 bits en images traitées et affichées en 8 bits.

100

101

*FIG. 1*

102

*FIG. 2*

*FIG. 3*

**EP 2 542 453 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6429933 B1